**Europäisches Patentamt**

**European Patent Office**

**Office européen des brevets**

(19)

(11) Veröffentlichungsnummer: **0 037 429**
**A2**

(12)

# EUROPÄISCHE PATENTANMELDUNG

(21) Anmeldenummer: **80102200.5**

(22) Anmeldetag: **24.04.80**

(51) Int. Cl.³: **B 23 B 5/12**
**B 23 B 3/26, B 24 B 39/04**

(30) Priorität: **05.04.80 DE 3013415**

(43) Veröffentlichungstag der Anmeldung:
**14.10.81 Patentblatt 81/41**

(84) Benannte Vertragsstaaten:
**AT BE CH DE FR GB IT LI LU NL SE**

(71) Anmelder: **TH. KIESERLING & ALBRECHT**
**Birkenweiher 66**
**D-5650 Solingen 1(DE)**

(72) Erfinder: **Goeke, Alfons**
**Burger Landstrasse 19**
**D-5650 Solingen(DE)**

(72) Erfinder: **Gerhardt, Günter**
**Vohwinkler Strasse 25**
**D-5600 Wuppertal-Vohwinkel(DE)**

(72) Erfinder: **Lorenz, Horst**
**Hossenhauser Strasse 15**
**D-5650 Solingen 1(DE)**

(54) Drehpolierkopf.

(57) Vorgeschlagen wird ein Drehpolierkopf (1) zum Drehen und Polieren von zylindrischen Stangen (2). Der Drehpolierkopf weist einzeln radial verstellbare Werkzeuge (3 . . . .6) und mindestens eine Zentralverstellung (7 . . . .13) für die gleichzeitige Verstellung der Werkzeuge um gleiche Wege in radialer Richtung zum Werkstück auf. Die Zentralverstellung erfolgt über eine Vielzahl von Winkelgetrieben (7,8) die aus je einem Ritzel (8) für jeden Werkzeugträger (15) und einem gemeinsamen Zahnring (7) bestehen. Die Verstellung kann auch für die Schälmesser (3,4) und die Polierrollen (5,6) separat erfolgen. Die Zahnringe (7, 50) sind konzentrisch zur Drehachse des Drehpolierkopfes und zur Längsachse des Werkstücks (2) angeordnet. Sie sind in der Grundplatte (41) des Drehpolierkopfes drehbar gelagert. Die Werkzeugträger (14...17) sind sternförmig um die Durchtrittsöffnung (48) der Grundplatte (41) des Drehpolierkopfes angeordnet.

Fig.1

EP 0 037 429 A2

Croydon Printing Company Ltd.

TH. KIESERLING & ALBRECHT, SOLINGEN

- 1 -

Drehpolierkopf.

Die Erfindung bezieht sich auf einen Drehpolierkopf entsprechend dem Oberbegriff von Anspruch 1.

Aus der GB-PS 1 128 210 ist es bekannt, zum gleichzeitigen Drehen und Polieren von Wellen sowohl Messer als auch die Rollen in einem Drehpolierkopf, d.h., in einer Querebene des Werkstücks anzuordnen. Sowohl die Polierrollen als auch die Schneidmesser können mit Stellgewinden einzeln radial zum Werkstück angestellt werden. Bei dieser Lösung ist die Einstellung auf einen anderen zu drehenden Durchmesser recht aufwendig, da nicht nur der Abstand der Messer und Rollen untereinander eingestellt werden muß, sondern auch die Konzentrizität von Werkstück und Drehpolierkopf eingerichtet werden muß.

Der Erfindung kommt demgegenüber die Aufgabe zu, die zentrische Einstellung von Messern und Rollen auf einen beliebigen Durchmesser im Arbeitsbereich der Schälmaschine zu vereinfachen.

Die Lösung dieser Aufgabe ist im kennzeichnenden Teil von Anspruch 1 wiedergegeben.
Es sind zwar Zentralverstellungen für im weiteren Sinne ähnliche Einrichtungen, wie z.B. Spannfutter an Drehmaschinen bekannt, jedoch handelt es sich dabei

- 2 -

um gleichartige Elemente, die zusammengefahren werden müssen. Bei der vorliegenden Erfindung hingegen handelt es sich um verschiedenartige Elemente, nämlich Polierrollen und Schneidmesser, die zentral verstellt werden müssen, die sich in ihrem Schwingungsverhalten unterscheiden, und die kräftemäßig unterschiedlich beansprucht werden.

Bevorzugt ist eine Ausgestaltung der Erfindung entsprechend Anspruch 2 vorgesehen. Der besondere Vorzug dieser Ausführungsform ist darin begründet, daß durch eine Verwendung von zwei unabhängig voneinander einstellbaren Zentralverstellungen zum einen für die Messer und zum anderen für die Polierrollen den unterschiedlichen Verschleiß von Messer- und Polierrollen in dem nötigen Maße Rechnung getragen werden kann. Dieser Weiterbildung der Erfindung kommt für den praktischen Betrieb des Drehpolierkopfes eine besondere Bedeutung zu.

Als vorteilhaft hat sich eine Ausgestaltung des Drehpolierkopfes entsprechend Anspruch 3 erwiesen. Dies erlaubt eine in sich starre Zentralverstellung, die insbesondere bei ungleichen angreifenden Kräften und evtl. asymmetrischer Verteilung der Rollen und Messerhalter von großer Bedeutung ist.

Die Ausgestaltung der Erfindung gem. Anspruch 3 erlaubt es, die Zentralverstellung mit einer großen Übersetzung der Stellbewegung zu verbinden. Die zur Verstellung erforderliche

TH. KIESERLING & ALBRECHT, SOLINGEN

0037429

- 3 -

Kraft wird bedienungsseitig kleiner und die mögliche
Genauigkeit bei der Verstellung der Rollen und Messerhalter wird größer.

Eine zweckmäßige weitere Ausgestaltung der Erfindung
ist in Anspruch 4 wiedergegeben.

Die Erfindung wird im einzelnen an Hand der Zeichnung
dargestellt.

Fig. 1    zeigt eine Stirnansicht des Drehpolierkopfes (halbiert)

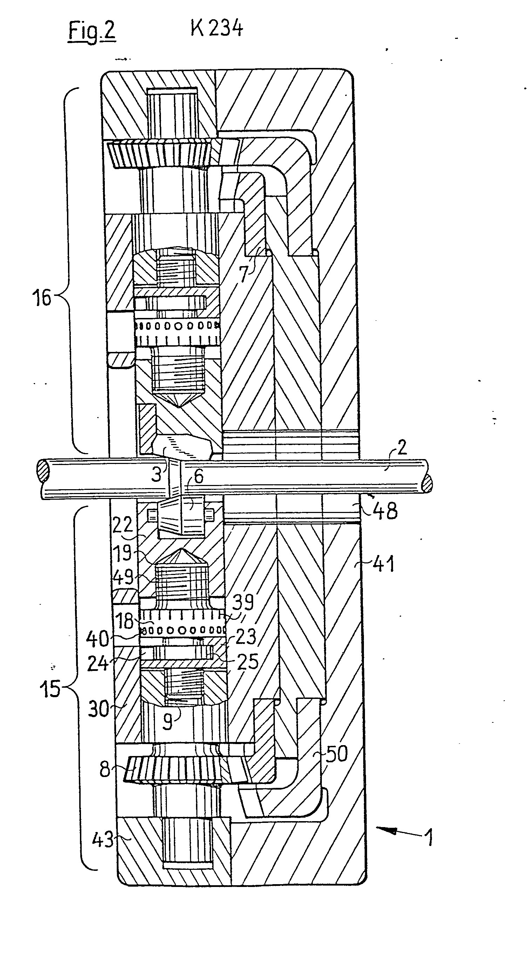

Fig. 2    einen Schnitt entsprechend Linie II-II

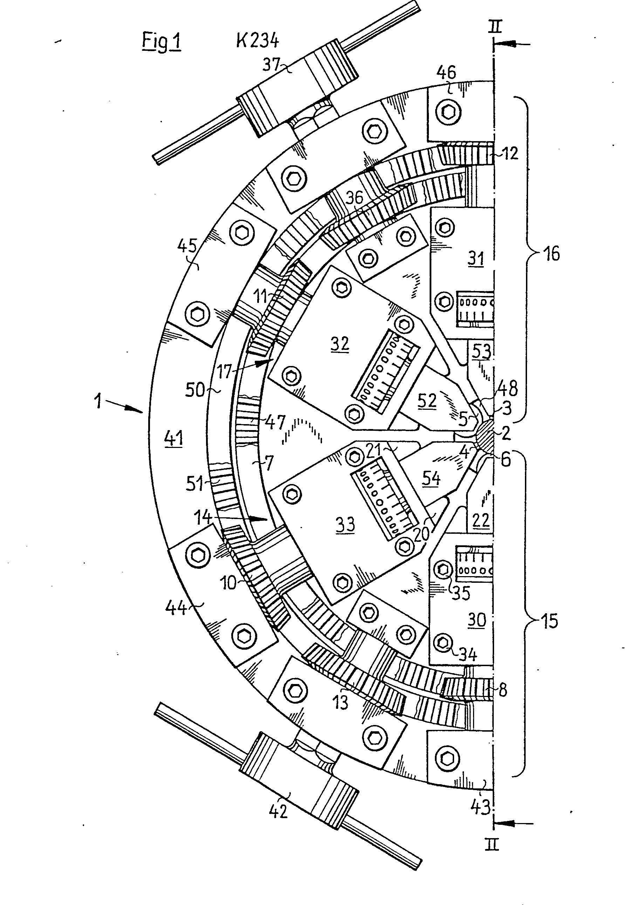

          in Fig. 1

Mit dem erfindungsgemäßen Drehpolierkopf 1 werden
zylindrische Stangen bzw. Wellen 2 gedreht und poliert.
Der Drehpolierkopf setzt sich zusammen aus einer
Grundplatte 41, zwei in dieser drehbar gelagerten
Zahnringen 7, 50, mit einer Verzahnung 47, 51, einer
Mehrzahl mit den Ringen kämmender Ritzel 8, 10, 11, 12,
aus vier Werkzeugträgern 14....17 und je Werkzeugträger
zwei Wangen 20, 21, die diesen seitlich festlegen. Die
Werkzeugträger tragen an ihren nach innen gerichteten
Enden Schneidmesser 3, 4 und Polierrollen 5,6. Die
Führungen der Werkzeugträger 14....17 werden stirnseitig
durch Deckplatten 30....33 abgeschlossen. Die Ritzel 13, 36
dienen der Betätigung der Zentralverstellung für die Messer
3, 4 bzw. Rollen 5,6 und werden vom Umfang des Drehpolierkopfes her durch einen Schlüssel 42, 37 gedreht.

-    -

TH. KIESERLING & ALBRECHT, SOLINGEN

- 4 -

Die Stange 2 wird in bekannten, nicht gezeigten Rollen oder in einem Spannwagen zentriert und durch einen zugehörigen Antrieb axial vorbewegt.

Die Werkzeugträger 14....17 sind untereinander bis auf die Werkzeugaufnahmen und die Ritzel 8, 10, 11, 12 gleich. Sie bestehen, erläutert am Beispiel des Werkzeugträgers 15, aus dem Werkzeug, der Polierrolle 6, dem zugehörigen Halter 22 mit einem selbsthemmenden Innengewinde 19, in das die Einzeleinstellschraube 18 mit dem daran angeformten Gewinde 49 eingreift. Am Kopf der Einzeleinstellschraube 18 ist eine Skala 39 vorgesehen, an der die Lage des einzelnen Werkzeugs relativ zu den anderen Werkzeugen ablesbar ist. Die Einstellschraube 18 wird mit Hilfe eines Stiftes, der in die Bohrungen 40 gesteckt wird, gedreht. Damit wird der einzelne Halter 22 radial zum Werkstück verstellt. Am oberen Ende der Stellschraube ist ein T-förmiger Aufsatz 25 ausgebildet, der in eine entsprechend geformte T-Nut 24 in dem am selbsthemmend ausgelegten Stellgewinde 9 angeformten, im Querschnitt rechteckigen Kopf 23 eingreift. Das Stellgewinde 9 seinerseits steht in Wirkverbindung mit einem selbsthemmenden Innengewinde im Ritzel 8. Dieses ist an seinem oberen und an seinem unteren Ende in der Grundplatte 41 bzw. in den daran angeformten Seitenwangen 20, 21 und in dem Kopfstück 43 gelagert. Letzteres nimmt die radial vom Werkstück ausgehenden Kräfte auf. Eine Deckplatte 30, die mit Schrauben 34, 35 in Gewindebohrungen in wie beim Halter 51 ausgebildeten Wangen 20, 21 befestigt sind, schließt die Führungen

- -

- 5 -

für den Walzenträger ab. Alle Ritzel 8 und 10....13 sind kegelförmig ausgebildet und greifen in eine entsprechende kegelförmig ausgebildete Verzahnung der Ringe 7 und 50 ein. Der Zahnring 7 bildet mit dem Ritzel 8 ein Winkelgetriebe für den Werkzeugträger. Der als Kegelrad ausgebildete Zahnring 7 stellt mit dem Ritzel 36 und dem Ritzel 8 sowie dem Stellgewinde 9 für den Wrrkzeugträger 15 und mit den entsprechend ausgebildeten Ritzeln und ·Stellgewinden der anderen Werkzeugträger 16....18 eine Zentralverstelleinrichtung für die Polierrollen dar, mit der alle Rollen gleichzeitig um das gleiche Maß radial auf das Werkstück oder zu diesem weg verstellt werden. Zu diesem Zweck ist der Zahnring 7, wie erwähnt, drehbar im Polierkopf 1 und konzentrisch zur Drehachse des Kopfes und zur Längsachse des Werkstücks gelagert. Gleiches gilt für die Zentralverstellung 13, 50, 10, 12 der Messer. Die Werkzeugträger, die alle Teile vom Werkzeug 6 bis zum radial am äußeren Ende desselben gelagerten Ritzel 8 mit zugehörigem·Stellgewinde 9 umfassen, sind sternförmig um das Werkstück 2 bzw. um die zentrische Durchtrittsöffnung 48 in der Grundplatte 41 gruppiert. Die einzelnen Elemente eines Trägers sind in einer Linie in radialer Richtung aufeinander folgend angeordnet.

Die Vorzüge der erfindungsgemäßen Ausbildung des Drehpolierkopfes sind in seiner einfachen Bedienung und in einer hohen Steifigkeit zu erblicken. Die hohe Steifigkeit

TH. KIESERLING & ALBRECHT, SOLINGEN

- 6 -

des Drehpolierkopfes resultiert daraus, daß die radial vom Werkstück ausgehenden Reaktionskräfte in gerader Linie, d.h., ohne auf Biegung beanspruchte Konstruktionselemente in die Grundplatte 41 bzw. in die daran vorgesehenen Kopfstücke 43 bis 46 eingeleitet werden. Die Verstellmöglichkeiten ermöglichen jede in der Praxis notwendige Verstellung der Werkzeuge. Die einzelnen herausnehmbaren Werkzeughalter erlauben einen schnellen Wechsel der Werkzeuge und einen Austausch gegen voreingestellte Werkzeuge. Sie erhöhen die Vielseitigkeit des Drehkopfes, der auch anstelle der Polierrollen mit einem zusätzlichen Satz Messer ggf. zum Vordrehen ausgerüstet werden kann. Hierzu müssen die Vormesser in dazu geeigneten Haltern in Werkstück-Achsrichtung versetzt angeordnet sein.

PATENTANSPRÜCHE :

1.  Umlaufender Drehkopf zum Schälen und gleichzeitigen Polieren von Wellen

    a)  mit einem oder mehreren in einer
        Querebene des Werkstücks am Umfang
        desselben verteilten Schneidmessern,
        und

    b)  in etwa gleicher Querebene des Werkstücks angeordneten Polierrollen,
        wobei

    c)  die Rollen und Messer radial zum
        Werkstück angestellt werden können,

    dadurch gekennzeichnet, daß

    zur Vereinfachung der Einstellung des Drehpolierkopfes (1) auf einen anderen Werkstückdurchmesser

    d)  die Halter ( 22, 52 ) mit den Polierrollen ( 5,6) und die Halter ( 53,54)
        mit den Messern ( 3,4) radial zum Werkstück (2) zentral verstellt werden können.

2.  Drehkopf nach Anspruch 1, dadurch gekennzeichnet, daß die Polierrollen (5,6) eine separate
    Verstelleinrichtung ( 36, 37, 7, 8) haben und
    die Schälmesser anabhängig davon über eine Verstelleinrichtung ( 42, 13, 50, 10) verstellt
    werden können.

    –        –

PATENTANSPRÜCHE:

3.    Drehpolierkopf nach den Ansprüchen 1 und 2,
      dadurch gekennzeichnet, daß die Zentralverstelleinrichtungen für die Werkzeuge ( 3,4, 5,6)
      aus zentrisch zur Drehachse des Kopfes (1)
      und zur Längsachse des Werkstücks (2) drehbar im Kopf gelagerten Zahnringen ( 7, 50)
      und aus je einem daran angreifenden
      Zahnritzel ( 8,10, 11,12) für jedes Schäl-
      messer (3,4) und für jede Polierrolle
      (5,6,) bestehen.

4.    Drehpolierkopf nach den Ansprüchen 1 bis 3,
      dadurch gekennzeichnet, daß die Zahnringe
      ( 7,50) und die Ritzel ( 8,10,11,12) miteinander Winkelgetriebe bilden, wobei die
      Drehachsen der Ritzel sternförmig um die
      Drehachse des Kopfes angeordnet sind und
      wobei jeder Träger (14bis 17) für eine Rolle
      (5,6) oder für ein Messer (3,4) durch ein
      Stellgewinde (9) mit dem Ritzel (8) verbunden ist.

5.    Drehpolierkopf nach einem oder mehreren
      der vorangegangenen Ansprüche  mit in zwei
      Längsabschnitte geteilten Werkzeugträgern,
      dadurch gekennzeichnet, daß die Zentralverstelleinrichtungen ( 7,8, 36,37) an den
      den Werkzeugen abgewandten Teilen der Halter
      (15) d.h., außen angeordnet sind.

0037429

1/2

Fig 1    K234

Fig.2    K 234